# EUROPÄISCHE PATENTSCHRIFT

(11) **EP 2 881 673 B1**
(45) Veröffentlichungstag und Bekanntmachung des Hinweises auf die Patenterteilung: **13.03.2019**
(21) Anmeldenummer: 14004073.4
(22) Anmeldetag: 03.12.2014
(51) Int. Cl.: F24D 13/02, F24D 19/10, G05D 23/19, H05B 1/02, H05B 3/22

(54) **Fußbodenheizung**
Floor heating
Plancher chauffant

(30) Priorität: 05.12.2013 DE 102013018155
(43) Veröffentlichungstag der Anmeldung: 10.06.2015
(73) Patentinhaber: Hemstedt GmbH, 74336 Brackenheim (DE)
(72) Erfinder: Hemstedt, Andreas, D-74336 Brackenheim (DE)
(74) Vertreter: Clemens, Gerhard

(56) Entgegenhaltungen:
- EP-A2- 2 339 244
- EP-A2- 2 530 389
- WO-A1-2004/113798
- DE-B3-102009 049 478
- US-A1- 2006 263 073
- US-A1- 2007 158 501
- US-A1- 2008 231 119

## Beschreibung

### TECHNISCHES GEBIET

Die vorliegende Erfindung betrifft eine Fußbodenheizung, die an eine erste elektrische Energiequelle anschließbar ist, mit einer Heizleitereinrichtung, mit einem ersten Heizkreis und einer ersten Leistungsstufe, zumindest einem zweiten Heizkreis mit einer zweiten Leistungsstufe und/oder weiteren Heizkreisen mit weiteren Leistungsstufen, einer Heiztemperatureinstelleinheit zum Einstellen der Soll-Temperatur, einem Temperatursensor zum Messen der Ist-Temperatur, einer Einrichtung zum Aktivieren der Heizleitereinrichtung in Abhängigkeit der jeweiligen Werte der Soll- und Ist-Temperatur, wobei eine einzige Regelvorrichtung mit einem Regelmodul vorhanden ist, die als Mehrstufenregler ausgebildet ist und zwischen die erste Energiequelle und die Heizeinrichtung geschaltet ist, wobei die Heiztemperatureinstelleinheit und der Temperatursensor ihre Signale an die Regelvorrichtung abgeben und der Regelmodul in Abhängigkeit der Differenz zwischen dem Soll- und Istwert eine oder mehrere Leistungsstufen der Heizkreise einzeln oder in Kombination aktiviert beziehungsweise deaktiviert.

### STAND DER TECHNIK

Neben Warmwasser gebundenen Heizsystemen kommen auch elektrisch betriebene Flächenheizvorrichtungen zum Einsatz. Hierbei werden Widerstandskabel mit einem eingearbeiteten Heizleiter unter, im oder auf dem Estrich verlegt. Wegen der geringen Bauhöhe können derartige elektrische Heizleitereinrichtungen direkt unter Fußboden; belägen verlegt werden. Aufgrund des relativ geringen Durchmessers der Heizkabel können diese im Klebebett von Fliesen verlegt und sogar unter Laminat eingesetzt werden. Unter Spannungsbeaufschlagung des Heizleiters gibt dieser Wärme ab. Eine Regeleinrichtung, die mit Sensoren zur Erfassung der Umgebungstemperatur verbunden ist, regelt den Heizbetrieb, indem der Heizleiter bei Unterschreiten einer vorgegebenen Temperatur mit Spannung beaufschlagt wird, wobei nach Überschreiten der vorgegebenen Temperatur die Spannungsbeaufschlagung abgeschaltet wird. Sobald die vorgegebene Temperatur wieder unterschritten wird, wird der Heizleiter erneut aktiviert.

Aus der EP 2 530 389 A2 ist eine elektrische Flächenheizvorrichtung der eingangs genannten Art bekannt. Dieses Dokument betrifft eine elektrischen Flächenheizvorrichtung für innen und/ oder außen, insbesondere Fußbodenheizung mit einer Heizleitereinrichtung mit zumindest einem Kaltanschlussbereich mit einer elektrisch leitenden, isolierten Anschlussleitung und einem Heizleitungsbereich mit einem Heizelement mit einem elektrisch leitenden, isolierten Heizleiter, der bei Spannungsbeaufschlagung eine größenmäßig feste Heizleistung abgibt, einer Schalteinrichtung zum Ein- beziehungsweise Ausschalten der Spannungsbeaufschlagung des Heizleiters, einer Regeleinrichtung zum Betreiben der Heizleitereinrichtung zur Erzielung einer gewünschten eingestellten Umgebungstemperatur und einer Anschlusseinrichtung für die Heizleitereinrichtung zum Anschluss an eine Spannungsquelle, wobei sich diese elektrische Heizvorrichtung dadurch auszeichnet, dass das Heizelement zumindest zwei oder mehrere Heizleiter aufweist und die Schalteinrichtung so ausgebildet ist, dass jeder Heizleiter separat mit Spannung beaufschlagbar ist, so dass die Heizleiter einzeln oder in einer vorgegebenen Anzahl kombinierbar oder zeitgleich gemeinsam in einem vorgegebenen Zeitintervall mit Spannung beaufschlagbar sind. Eine derartige Flächenheizvorrichtung kann energiesparend betrieben werden, an die jeweiligen Temperaturverhältnisse jeweils variabel angepasst werden, wirtschaftlich hergestellt und in der üblichen Verlegetechnik verlegt werden.

Es ist weiterhin eine Flächenheizvorrichtung bekannt, bei der Heizleiter mit unterschiedlichen Widerstandswerten und damit Leistungswerten eingesetzt werden, wobei jeder Heizdraht separat angesteuert werden kann. Dabei wird ein zentraler Thermostat eingesetzt, der eine Heizleistungsstufe ansteuert und mittels dem eine Basistemperatur einstellbar ist. Zusätzlich sind noch weitere individuelle Thermostate vorhanden, die separat aktiviert werden können und die weitere Leistungsstufen innerhalb des Heizleiters aktivieren. Eine derartige Heizvorrichtung ist bezüglich der Energieeffizienz jedoch nicht optimal, teuer und wenig benutzerfreundlich.

In der US 2007/158501 A1 ist eine Fußbodenheizung für den Fußboden eines Flugzeuges beschrieben, wobei der Fußboden aus einzelnen Paneln besteht, die jeweils 3 Heizkreise aufweisen. Innerhalb des Panels ist eine Kontrolleinheit geschaltet, die mit einem Schalter in Verbindung steht, über den wahlweise einer oder mehrere der Heizelemente des Heizkreises aktiviert werden können. Dabei kann eine Hauptkontrolleinheit vorhanden sein, die mit der in jedem Panel integrierten Kontrolleinheit kommuniziert. Vorhandene Temperatursensoren kommunizieren mit der Kontrolleinheit. Durch diese Ausgestaltung können in unterschiedlichen Bereichen des Fußbodens die jeweiligen Temperaturverhältnisse angepasst werden.

### DARSTELLUNG DER ERFINDUNG

Ausgehend von dem genannten Stand der Technik liegen der Erfindung die Aufgabe beziehungsweise das technische Problem zugrunde, eine Fußbodenheizung der eingangs genannten Art anzugeben, die die im Stand der Technik genannten Vorteile beibehält und darüber hinaus eine verbesserte Energieeffizienz aufweist und somit ein wirtschaftliches Heizen gewährleistet, die mittels der einfachen und bewährten Verlegetechnik verlegt werden kann, die wirtschaftlich hergestellt werden kann und eine dauerhaft zuverlässige Funktion gewährleistet. Eine weitere Aufgabe liegt darin, bei Fußbodenheizungen der eingangs genannten Art alternative Energiequellen mit einzubinden und gleichzeitig - neben einer einfachen Montage - eine hohe Energieeffizienz zu ermöglichen, einen wirtschaftlichen Einsatz zu gewährleisten, variabel einsetzbar zu sein und eine dauerhaft zuverlässige Funktionalität zu ermöglichen.

Die erfindungsgemäße elektrische Fußbodenheizung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße elektrische Fußbodenheizung der eingangs genannten Art zeichnet sich demgemäß dadurch aus, dass der Regelmodul als PI-Regelmodul ausgebildet ist, der in Abhängigkeit der Regelabweichung, das heißt der Differenz zwischen Soll- und Ist-Temperatur jeweils einen Stellwert berechnet, der mit seinem P-Anteil von der Größe und mit seinem I-Anteil von der Dauer der Regelabweichung abhängt und entsprechend die einzelnen Heizkreise ansteuert, auf die Regelvorrichtung zusätzlich eine zweite elektrische Energiequelle für die Leistungsstufen der Heizkreise schaltbar ist, die erste Energiequelle das übliche Stromnetz darstellt und die zweite Energiequelle als individuelle alternative Energiequelle, wie beispielsweise Photovoltaikanlage oder Windkraftanlage, ausgebildet ist, und eine Logikschalteinheit zwischen der zweiten Energiequelle und Regelvorrichtung geschaltet ist, die ein Steuersignal bezüglich der jeweiligen aktuellen Energieproduktion der zweiten Energiequelle an die Regelvorrichtung abgibt und bei ausreichender Energieproduktion die zweite Energiequelle zur Energieversorgung der Heizleitereinrichtung freigibt.

Dadurch, dass eine einzige Regelvorrichtung für sämtliche Heizkreise eingesetzt wird, wird die aufwendige, teure und bedienerunfreundliche Installation von mehreren Thermometern wie im Stand der Technik vermieden und die gesamte Heizvorrichtung weist eine hohe energetische Effizienz auf.

Durch diese Art der Regelung wird die Heizleistung bei Annäherung an die Soll-Temperatur sukzessive verringert und so ein Überschwingen der Bodentemperatur über den Sollwert vermieden. Dies bedeutet eine energiesparende und effiziente Umsetzung der elektrischen Energie sowie neben der Steigerung des Komforts auch eine Verbesserung der Wirtschaftlichkeit auf Seiten des Benutzers.

Die Leistungsstufen der Heizkreise können dabei jeweils eine gleiche Heizleistung oder unterschiedliche Heizleistungen aufweisen. Insbesondere die letztgenannte Variante ist bezüglich der Regelcharakteristik eines PI-Regelmoduls besonders effektiv und hat eine hohe Effizienz zur Folge.

Eine besonders benutzerfreundliche Ausführungsvariante, die eine dauerhaft zuverlässige Funktionalität im Betriebszustand zuverlässig gewährleistet, zeichnet sich dadurch aus, dass eine Betriebsartschalteinheit vorhanden ist, die mit der Regelvorrichtung kommuniziert und mittels derer folgende Betriebszustände über die Regelvorrichtung einstellbar sind:
1. Zustand: Energieversorgung der Heizleitereinrichtung mit deren Leistungsstufen über die erste Energiequelle,
2. Zustand: Energieversorgung der Heizleitereinrichtung mit deren Leistungsstufen über die zweite Energiequelle und
3. Zustand: Energieversorgung der Heizleitereinrichtung mit deren Leistungsstufen durch eine Kombination der ersten und zweiten Energiequelle.

Falls sich der Nutzer dafür entscheidet, lediglich die alternative Energiequelle zu Heizzwecken einzusetzen, zeichnet sich eine besonders vorteilhafte Ausgestaltung der erfindungsgemäßen Heizvorrichtung dadurch aus, dass die Regelvorrichtung so ausgebildet ist, dass nur bei dem Vorliegen eines positiven Signals der Logikeinheit und Aktivierung des zweiten Zustands eine Aktivierung der Heizleitereinrichtung erfolgt, ansonsten die Heizleitereinrichtung deaktiviert ist.

Eine bevorzugte Weiterbildung, die die Benutzerfreundlichkeit erhöht und die zu beachtenden Sicherheitsvorschriften umsetzt, zeichnet sich dadurch aus, dass mit der Betriebsartschalteinheit ein vierter Betriebszustand Frostschutz einstellbar ist, bei dem die Regelvorrichtung die Heizleitereinrichtung bei Unterschreiten einer vorgegebenen Temperatur aktiviert, unabhängig von dem eingestellten Betriebszustand der zweiten Energiequelle.

Eine konstruktiv besonders einfach umzusetzende, auch auf eine in der Praxis bewährte Herstelltechnik zurückgreifende vorteilhafte Ausgestaltung zeichnet sich dadurch aus, dass die Heizleitereinrichtung eine Heizleitung aufweist, die mehrere elektrisch isoliert und unabhängig voneinander ansteuerbare Heizleiter mit gleichen oder unterschiedlichen Leistungsstufen aufweist, die separat oder in Kombination aktiviert werden können.

Eine hinsichtlich der Umsetzung einer Flächenheizvorrichtung besonders vorteilhafte Ausgestaltung zeichnet sich dadurch aus, dass die Heizleitereinrichtung mit Heizleitung als eine oder mehrere Heizmatten ausgebildet sind, wobei die Heizleitungen insbesondere meanderförmig angeordnet vorhanden sind.

Eine kompakte, benutzerfreundliche vorteilhafte Ausgestaltung zeichnet sich dadurch aus, dass das Regelmodul, die Heiztemperatureinstelleinheit und Betriebsarteinstelleinheit in einem Reglergehäuse angeordnet sind.

Eine die Benutzerfreundlichkeit weiter erhöhende vorteilhafte Ausgestaltung zeichnet sich dadurch aus, dass das Gehäuse optische Anzeigeeinheiten zur Anzeige der eingestellten Solltemperatur und des eingestellten Betriebszustandes aufweist.

Eine in der Praxis besonders vorteilhafte Ausgestaltung, die eine sehr gute Regelungscharakteristik aufweist, zeichnet sich dadurch aus, dass zwei Heizkreise vorhanden sind, wobei die erste Leistungsstufe circa 33 % und die zweite Leistungsstufe circa 66 % der Gesamtheizleistung aufbringt, wobei es sich als besonders vorteilhaft herausgestellt hat, die Stellwertcharakteristik so auszubilden, dass bei einem durch die Regelvorrichtung berechneten Stellwert von circa 33 % die erste Leistungsstufe aktiviert wird, bei einem Stellwert von circa 33 % bis 66 % die zweite Leistungsstufe aktiviert wird und bei einem Stellwert zwischen 66 % und 100 % die erste und zweite Leistungsstufe aktiviert wird.

Die erfindungsgemäße Heizvorrichtung ermöglicht den Einsatz als Elektroheizung, die durch die Energiewende zu einem fundamentalen Baustein im Energiemix wird. Dies ist insbesondere unter dem Gesichtspunkt, dass auch alternative Energiequellen für die Heizvorrichtung benutzerfreundlich und effizient eingesetzt werden, von Vorteil.

Durch den Einsatz von mehreren Heizleistungskreisen wird durch die erfindungsgemäße Regelvorrichtung ein Stromsparheizbetrieb möglich, der bisher nicht umsetzbar war. Zudem ist die Sicherheit erhöht, da die zusätzlichen Heizleistungskreise als Reserveheizkreise eingesetzt werden können, so dass auch beim Ausfall eines Heizkreise ein Komfortheizbetrieb weiterhin aufrechterhalten werden kann. Dadurch können erhebliche Kosten für zeitaufwendige Fehlerortung und Reparatur bei Versagen eines Heizleistungskreislaufs vermieden werden.

Durch die erfindungsgemäße Heizvorrichtung ergeben sich insbesondere folgende Vorteile:
- Es ist ein stromsparender Betrieb möglich.
- Es sind die im Stand der Technik bekannten dünnen Heizsysteme, die die bekannte schlanke, muffenlose Verbindungstechnik der Anmelderin umsetzen, problemlos einsetzbar.
- Durch Zu- und Abschalten von einzelnen Heizleitern in Verbindung mit der Regelungsvorrichtung ist ein variabler Heizbetrieb mit effizienter Energieumsetzung, hoher Benutzerfreundlichkeit und dauerhaft zuverlässiger Funktion möglich.
- Im Falle eines Ausfalls eines aktiven Heizkreises ist die Zuschaltung eines Reserveheizkreise problemlos möglich, was die Heizbetriebssicherheit nicht unerheblich erhöht.

Die gemäß eines bevorzugten Ausführungsbeispiels als Zweikreisregler ausgebildete Regelvorrichtung gewährleistet einen besonders energieeffizienten Einsatz.

Die gewünschte Bodentemperatur wird in einem Ausführungsbeispiel über einen Drehknopf eingestellt und ein Schiebeschalter erlaubt die Auswahl der Betriebsart. Neben der Grundfunktion einer Fußbodenheizung mit drei Heizstufen (Heizkreis 1, Heizkreis 2, Heizkreis 1 + 2) kann die Regelvorrichtung besonders günstig im Zusammenhang mit alternativen Energiequellen (zum Beispiel Photovoltaikanlagen oder Windkraftanlage) zur Optimierung des Eigenverbrauchs eingesetzt werden.

In einem bevorzugten Ausführungsbeispiel sind drei Betriebsarten durch den Benutzer frei wählbar:
1. Ausgeschaltet (Frostschutz aktiv).
2. Nur Betrieb bei ausreichender Energielieferung durch die alternative Energiequelle.
3. Betrieb über die erste und zweite Energiequelle.

Je nach aktueller Differenz zwischen Soll- und Istwert der Bodentemperatur schaltet die Regelvorrichtung nur die Heizkreis 1, den Heizkreis 2 oder beide Heizkreise.

Durch den Einsatz der Logikeinheit für die Photovoltaikanlage ist ein effizientes Management der Stromerträge aus dieser alternativen Energiequelle problemlos möglich, die im Bedarfsfall für Heizzwecke eingesetzt wird oder deren Erträge in das Stromnetz eingespeist werden, sofern keine Anforderung für den Heizbetrieb vorliegt. Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Darstellung einer elektrischen Heizvorrichtung mit mehreren Heizkreisen, die über eine Regelvorrichtung angesteuert werden, wobei eine erste Energiequelle und eine zweite Energiequelle über einen Verteiler an die Regelvorrichtung angeschlossen sind,
- Fig. 2: stark schematisierte Darstellung einer elektrischen Heizvorrichtung mit mehreren Heizkreisen, die über eine Regelvorrichtung angesteuert werden, wobei eine erste Energiequelle und eine zweite Energiequelle separat an die Regelvorrichtung angeschlossen ist,
- Fig. 3: stark schematisierte Darstellung einer Heizvorrichtung mit mehreren Heizkreisen und einer Regelvorrichtung, die die Heizkreise separat oder in Kombination ansteuert, wobei die Regelvorrichtung mit einer ersten Energiequelle in Kommunikationsverbindung steht,
- Fig. 4: stark schematisierte Darstellung einer Heizvorrichtung mit mehreren Heizkreisen und einer Regelvorrichtung, die die Heizkreise separat oder in Kombination ansteuert, wobei die Regelvorrichtung mit einer ersten und einer zweiten Energiequelle über einen Verteilen in Kommunikationsverbindung steht und
- Fig. 5: stark schematisierte Darstellung einer elektrischen Heizvorrichtung mit zwei Heizkreisen, die über einen Zweikreisregler angesteuert wird und ihre Energie aus dem Stromnetz und/oder einer Photovoltaikanlage unter Zwischenschaltung einer Verteilereinheit und einer der Photovoltaikanlage nachgeschalteten Logikeinheit bezieht.

### WEGE ZUM AUSFÜHREN DER ERFINDUNG

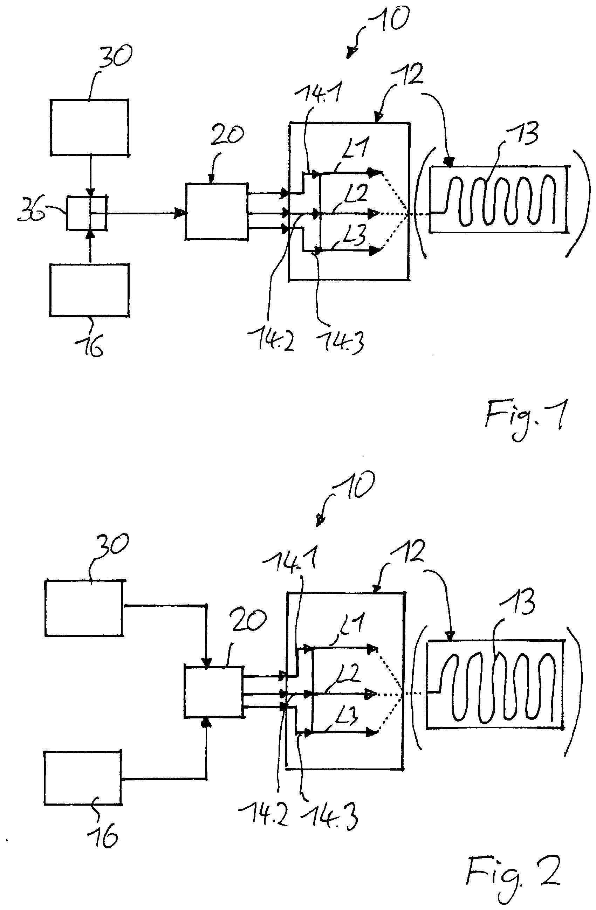

In Fig. 1 ist stark schematisiert in einem vereinfachten Blockschaltdiagramm eine elektrische Heizvorrichtung 10 dargestellt, die eine Heizleitereinrichtung 12 mit drei Heizkreisen 14.1, 14.2, 14.3 mit jeweils zugehörigen Leistungsstufen L1, L2, L3 aufweist. Die Heizleitereinrichtung 12 kann dabei - wie in Fig. 1 rechts in Klammern dargestellt - als Heizmatte ausgebildet sein, die eine meanderförmig verlaufende Heizleitung 13 aufweist, innerhalb derer die einzelnen Heizkreise 14.1, 14.2, 14.3 elektrisch isoliert als einzelne Heizdrähte vorhanden sind. Eine derartige Heizleitung 13 ist in der EP 2 530 389 der Anmelderin beschrieben.

Die einzelnen Heizkreise 14.1, 14.2, 14.3 sind an eine Regelvorrichtung 20 angeschlossen, die je nach Bedarf die Heizkreise 14.1, 14.2, 14.3 einzeln oder in Kombination über Relais aktiviert.

An die Regelvorrichtung 20 ist über einen Verteiler 36 eine erste Energiequelle 16 und eine zweite Energiequelle 30 angeschlossen, die einerseits die Regelvorrichtung 20 als auch die Heizkreise 14.1, 14.2, 14.3 mit elektrischer Energie versorgen. In einem praktischen Anwendungsfall stellt die erste Energiequelle 16 das Stromnetz dar, das in der Regel in Bauwerken überall zur Verfügung steht, und die zweite Energiequelle 30 ist eine individuelle alternative Energiequelle, wie beispielsweise eine Photovoltaikanlage, Windkraft oder dergleichen, die vor Ort betrieben wird.

Die Regelvorrichtung 20 ist so einstellbar, dass die Energieversorgung lediglich über die zweite alternative Energiequelle 30 oder über die Kombination der ersten Energiequelle und zweiten Energiequelle 30 betrieben werden kann.

In Fig. 2 ist ebenfalls in stark schematisierter Art und Weise in Form eines Blockschaltdiagramms eine alternative elektrische Heizvorrichtung 10 dargestellt, die sich von der Heizvorrichtung 10 gemäß Fig. 1 dadurch unterscheidet, dass die erste und zweite Energiequelle 16, 30 getrennt auf die Regelvorrichtung 20 geschaltet sind und somit deren Energie entweder vollkommen getrennt oder in Kombination abgerufen werden kann. Gleiche Bauteile tragen dasselbe Bezugszeichen und werden nicht nochmals erläutert.

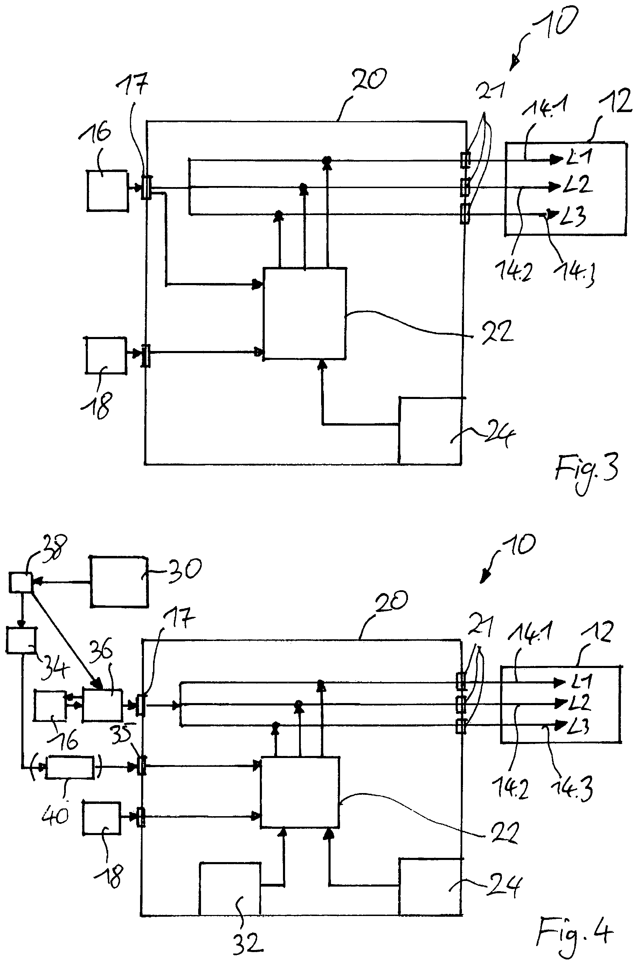

Fig. 3 zeigt eine Heizvorrichtung 10 in einem Blockschaltdiagramm, bei der nur eine erste Energiequelle 16 über eine erste Anschlusseinheit 17 an die Regelvorrichtung 20 angeschlossen ist. Die Regelvorrichtung 20 weist weiterhin drei Anschlussausgänge 21 auf, an die die Heizkreise 14.1, 14.2, 14.3 der Heizeinrichtung 12 jeweils separat angeschlossen sind. Innerhalb der Regelvorrichtung 20 ist ein Regelmodul 22 vorhanden, der von einem Signal einer an der Regelvorrichtung 20 vorhandenen Heiztemperatureinstelleinheit 24 beaufschlagt wird. Das Signal der Heiztemperatureinstelleinheit 24 repräsentiert die jeweils gewünschte Solltemperatur.

Weiterhin ist ein Temperatursensor 18 vorhanden, der im Bereich der Heizeinrichtung 12 angeordnet ist und der ein Signal an das Regelmodul 22 abgibt, das den Ist-Temperaturwert repräsentiert.

Über die erste Energiequelle 16 wird sowohl das Regelmodul 22 als auch die Heizkreise 14.1, 14.2, 14.3 mit Energie versorgt. Das Regelmodul 22 ist dabei bevorzugt als PI-Regelmodul ausgebildet. Der Regelmodul 22 berechnet zunächst die Differenz aus der Soll- und Ist-Temperatur, das heißt die Regelabweichung, und berechnet weiterhin daraus einen Stellwert. Der Stellwert ist abhängig von der Größe der Regelabweichung (P-Anteil) und der Dauer der Regelabweichung (I-Anteil). Je größer diese ist und je länger sie anhält, desto höher wird der Stellwert angesetzt. In Abhängigkeit der Größe des jeweiligen Stellwertes aktiviert der Regelmodul 22 die jeweiligen Heizkreise 14.1, 14.2,14.3 entweder einzeln oder in Kombination.

Durch eine derartige Regelvorrichtung 20 mit dem Regelmodul 22 wird eine sparsame und effiziente Energieversorgung gewährleistet, wobei die Heizleistung bei Annäherung an der Solltemperatur sukzessiv verringert wird und so ein Überschwingen der Bodentemperatur über den Sollwert vermieden wird, was die Energieeffizienz deutlich erhöht. Weiterhin können die aus dem Stand der Technik bekannten Thermostate für den Heizkreis vollständig entfallen. Die einzige Regelvorrichtung regelt den Betrieb der gesamten Heizvorrichtung.

In Fig. 4 ist eine weitere Ausführungsvariante einer Heizvorrichtung 10 dargestellt, die sich von der Heizvorrichtung 10 gemäß Fig. 3 dadurch unterscheidet, dass zusätzlich eine zweite Energiequelle 30 vorhanden ist, die beispielsweise eine vor Ort vorhandene Photovoltaikanlage sein kann. Auf die Energie der zweiten Energiequelle 30 hat die Regelvorrichtung 20 Zugriff.

Der zweiten Energiequelle 30 ist ein Wechselrichter 38 nachgeschaltet, der den aus der zweiten Energiequelle 30 ankommenden Gleichstrom zu Wechselstrom umformt, wobei der Wechselrichter 38 auf einen Verteiler 36 geschaltet ist, an dem auch die erste Energiequelle 16 angeschlossen ist, und der über die erste Anschlusseinheit 17 mit der Regelvorrichtung 20 verbunden ist. An den Wechselrichter 38 ist weiterhin eine Logikeinheit 34 angeschlossen, die auch als solarer Daten-Logger bezeichnet wird. Die Logikeinheit 34 gibt - sofern die zweite Energiequelle 30 genügend Energie produziert - ein Steuersignal über einen Steuereingang 35 an die Regelvorrichtung 20 ab. Der Anschluss ist als potentialfreier Kontakt ausgebildet.

Weiterhin ist an der Regelvorrichtung 20 eine Betriebsarteinstelleinheit 32 vorhanden, die mit dem Regelmodul 22 in Kommunikationsverbindung steht und über die die gewünschte Heizbetriebsart eingestellt wird.

Die Betriebsarteinstelleinheit 32 kann beispielsweise als Schiebeschalter und die Heiztemperatureinstelleinheit 24 kann beispielsweise als Drehschalter ausgebildet sein.

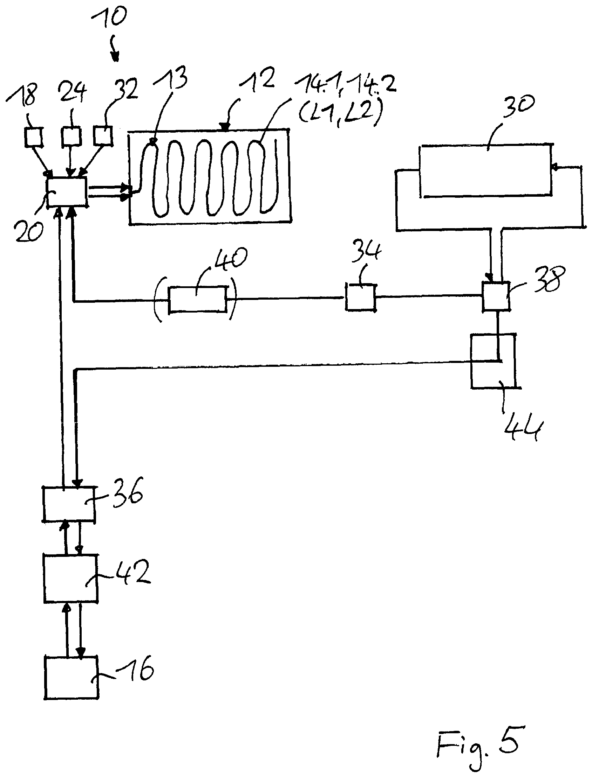

Die Funktionsweise der elektrischen Heizvorrichtung gemäß Fig. 4 wird nachfolgend anhand der schematischen Schaltbilddarstellung von Fig. 5 als konkretes Ausführungsbeispiel beschrieben. Die Regelvorrichtung 20 ist dabei als Zweikreisregelvorrichtung mit PI-Charakteristik ausgebildet.

Im Ausführungsbeispiel ist die Regelvorrichtung konzipiert für die Steuerung von einer Heizleitereinrichtung 12 mit zwei Heizkreisen 14.1, 14.2 mit unterschiedlichen Leistungsstufen, wobei sich die Leistungen der Stufen im vorliegenden Ausführungsbeispiel im Verhältnis 4:7 unterscheiden.

Die beiden Leistungskreise können einzeln oder gemeinsam aktiviert werden, womit sich die folgenden Heizstufen ergeben (die Prozentangaben beziehen sich auf die maximal von der Regelvorrichtung steuerbare Leistung; diese wird erreicht, wenn beide Leistungskreise eingeschaltet sind):

| | |
|---|---|
| Stufe 0: | 0,0 % Leistung (beide Leistungskreise ausgeschaltet) |
| Stufe 1: | 36,4 % Leistung (Leistungskreis 1 eingeschaltet) |
| Stufe 2: | 63,4 % Leistung (Leistungskreis 2 eingeschaltet) |
| Stufe 3: | 100,0 % Leistung (beide Leistungskreise eingeschaltet) |

Die Regelvorrichtung 20 ist so ausgebildet, dass die maximal aktivierbare Heizstufe abhängig von der Betriebsart begrenzt werden kann.

Es können auch Heizungssysteme mit anderen als den oben beschriebenen Leistungsabstufungen eingesetzt werden. Insbesondere ist es auch möglich, Leistungsstufen mit gleichen Leistungen einzusetzen.

Die Regelung der Temperatur erfolgt im Ausführungsbeispiel durch Messung der Ist-Temperatur über den externen, im Boden eingebauten Temperatursensor 18. Der Sollwert der Bodentemperatur wird an der Regelvorrichtung 20 über die Heiztemperatureinstelleinheit 24 eingestellt. Der Einstellbereich liegt beim vorliegenden Ausführungsbeispiel zwischen + 10 °C und + 55 °C.

Die Differenz zwischen Soll- und Isttemperatur (Regelabweichung) wird dem PI- Regelmodul 22 zugeführt, das hieraus einen Stellwert (0 bis 100%) berechnet. Der Stellwert ist abhängig von der Größe der Regelabweichung (P-Anteil) und der Dauer der Regelabweichung (I-Anteil). Je größer diese ist und je länger sie anhält, desto höher wird der Stellwert.

Abhängig vom berechneten Stellwert werden die Heizstufen wie folgt von dem Regelmodul 22 geschaltet:

| | |
|---|---|
| Stellwert =0%: | Stufe 0 |
| 0 % < Stellwert <=36%: | Stufe 1 (Heizkreis 14.1 aktiviert) |
| 36 % < Stellwert <=63%: | Stufe 2 (Heizkreis 14.2 aktiviert) |
| 63 % < Stellwert <= 100%: | Stufe 3 (Heizkreis 14.1 und 14.2 aktiviert) |

Durch diese Art der Regelung wird die Heizleistung bei Annäherung an die Solltemperatur sukzessive verringert und so ein Überschwingen der Bodentemperatur über den Sollwert vermieden.

Die Betriebsart der Regelvorrichtung 20 wird über die Betriebsarteinstelleinheit 32 eingestellt. Im vorliegenden Ausführungsbeispiel sind drei Betriebsarten möglich:
1. Ausgeschaltet (Frostschutzbetrieb),
2. Betrieb nur mit erneuerbarer Energie (aus der zweiten Energiequelle 30) zulässig und
3. Betrieb mit erneuerbarer und Netzenergie (zweite Energiequelle 30 und erste Energiequelle 16) zulässig.

Die jeweils eingestellten Betriebszustände sind an der Regelvorrichtung 20 optisch erkennbar dargestellt.

Im Frostschutzbetrieb ist die Boden-Solltemperatur unabhängig von der Einstellung über die Betriebsarteinstelleinheit 32 fest auf 5 °C eingestellt. Der Signaleingang von der Logikeinheit 34 hat keine Funktion.

Im Betriebszustand "nur mit erneuerbarer Energie" wird als Sollwert die Einstellung der Heiztemperatureinstelleinheit 24 verwendet und die Heizvorrichtung 10 wird nur eingeschaltet, wenn das Signal der Logikeinheit 34 aktiv ist, das heißt die zweite Energiequelle 30 genügend Energie produziert. Die Heizstufe in dieser Betriebsart kann bei Bedarf auch begrenzt werden.

Im Betrieb "mit erneuerbarer und Netzenergie" wird als Sollwert auch die Einstellung Heiztemperatureinstelleinheit 24 verwendet und die Heizvorrichtung 10 wird unabhängig vom dem Signal der Logikeinheit 34 eingeschaltet. Auch in dieser Betriebsart kann die Heizstufe bei Bedarf begrenzt werden.

Schließlich ist es noch möglich, über nicht näher dargestellte Taster eine Schnellaufheizung einzustellen, bei der unabhängig von der eingestellten Betriebsart eine definierte maximale Leistungsstufe geschaltet wird, bis die Bodentemperatur den eingestellten Sollwert erreicht hat.

Das Ausführungsbeispiel zeigt eine Bodentemperatur-Regelvorrichtung 20 für elektrische Fußbodenheizungen, die speziell für Heizleiter mit zwei Leistungsstufen konzipiert ist. Neben der Grundfunktion einer Fußbodenheizung mit drei Leistungsstufen (Leistungsstufe 1, Leistungsstufe 2, Leistungsstufe 1 + 2) kann die von der Regelvorrichtung 20 aus dem Hausnetz (erste Energiequelle 16) abgerufene Leistung zusätzlich über einen Steuereingang begrenzt werden, so dass die Regelvorrichtung 20 besonders günstig zur Optimierung des Eigenverbrauchs im Zusammenhang mit einer weiteren alternativen Energiequelle 30 (zum Beispiel Photovoltaikanlage) für die Erzeugung von erneuerbaren Energie eingesetzt werden kann. Die gewünschte Bodentemperatur wird über die Heiztemperatureinstelleinheit 24 (Drehknopf) in einfacher Art und Weise eingestellt, die Betriebsarteinstelleinheit 32 (Schiebeschalter) erlaubt die Auswahl der Betriebsart. Unabhängig davon, kann über Taster eine Schnellaufheizung gestartet werden. Die Rückmeldung des aktuellen Betriebszustandes erfolgt beispielsweise im Ausführungsbeispiel über eine optische Anzeige, zum Beispiel über eine Zweifarben-LED.

Wie in Fig. 5 dargestellt, ist im Ausführungsbeispiel der zweiten Energiequelle 30 (Photovoltaikanlage) ein Wechselrichter 38 nachgeschaltet, der über einen Erzeugungszähler 44, der die gesamte elektrische Energie misst, die von der Photovoltaikanlage erzeugt wurde, auf einen Verteiler 36 geschaltet ist. Der Verteiler 36 ist zur ersten Energiequelle 16 (Stromnetz) hin auf einen Lieferungs- und Bezugszähler 42 geschaltet, der die aus dem Stromnetz bezogene Energie zählt, die benötigt wird, wenn über die zweite Energiequelle 30 (Photovoltaikanlage) keine Energie geliefert wird. Wird von der zweiten Energiequelle 30 Energie erzeugt, die nicht benötigt wird, wird diese ins Netz abgegebene Energie auf dem Lieferungszähler 42 gemessen. Der Verteiler 36 wiederum ist auf die Regelvorrichtung 20 geschaltet, die in Abhängigkeit der Signale des Temperatursensors 18, dem über die Heiztemperatureinstelleinheit 24 eingestellten Temperatur-Sollwert und der über die Betriebsarteinstelleinheit 32 eingestellten Betriebsart die im Ausführungsbeispiel vorhandenen beiden Heizkreise ansteuert, so dass die in Fig. 5 schematisch dargestellten drei Leistungsstufen (1/3, 2/3, 3/3) im Bedarfsfall jeweils aktivierbar sind. Der Lieferungs- und Bezugszähler 42 ist als Stromzähler/ Zweirichtungszähler ausgebildet und speist den nicht verbrauchten Strom, den die zweite Energiequelle 30 (Photovoltaikanlage) erzeugt, ins Netz ein, sofern er nicht von der Heizvorrichtung 10 benötigt wird.

Im dargestellten Ausführungsbeispiel erzeugt die Photovoltaikanlage (zweite Energiequelle 30) Strom durch Sonnenenergie. Die Logikeinheit 34 ist in ständiger Kommunikation mit den Wechselrichter 38. In der Logikeinheit 34 werden Schwellwerte gespeichert, das heißt es ist zum Beispiel möglich, bei einer 10 kW P-Anlage in Abhängigkeit der aktuellen Einspeiseleistung 3,5 kW oder 8 kW-Verbrauch für den Eigenverbrauch zuzuschalten. Die beschriebene Zweikreisregelvorrichtung 20 entscheidet - in Kommunikation mit der Logikeinheit 34 - ob mit Strom aus der zweiten Energiequelle 30 (Strom der Photovoltaikanlage) geheizt wird oder nicht.

Zwischen der Logikeinheit 34 und der Regelvorrichtung 20 kann bevorzugt eine Relaisstation 40 geschaltet sein, die in einfacher Art und Weise das Schalten elektrischer Verbraucher über ein Netzwerk ermöglicht. Die Bedienerkonfiguration kann dabei bequem über Web-Interface erfolgen. Weiterhin kann das Schalten direkt am Gerät per SNMP oder Syslog oder integriert in eigenen Anwendungen durchgeführt werden. Mit einer derartigen Relaisstation 40 kann durch eine Energieverbrauchsmessung durchgeführt werden, die eine genaue Bestimmung der genutzten Energie ermöglicht. Ferner kann eine Vielzahl weiterer elektrischer Größen gemessen und dargestellt werden.

## Patentansprüche

1. Fußbodenheizung, die an eine erste elektrische Energiequelle (16) anschließbar ist, mit
- einer Heizleitereinrichtung (12), mit
- - einem ersten Heizkreis (14.1) und einer ersten Leistungsstufe (L1),
- - zumindest einem zweiten Heizkreis (14.2) mit einer zweiten Leistungsstufe (L2) und/oder
- - weiteren Heizkreisen (14.3) mit weiteren Leistungsstufen (L3),
- einer Heiztemperatureinstelleinheit (24) zum Einstellen der Soll-Temperatur,
- einem Temperatursensor (18) zum Messen der Ist-Temperatur,
- einer Einrichtung zum Aktivieren der Heizleitereinrichtung (12) in Abhängigkeit der jeweiligen Werte der Soll- und Ist-Temperatur, wobei
- eine einzige Regelvorrichtung (20) mit einem Regelmodul (22) vorhanden ist, die als Mehrstufenregler ausgebildet ist und zwischen die erste Energiequelle (16) und die Heizeinrichtung (12) geschaltet ist, wobei die Heiztemperatureinstelleinheit (24) und der Temperatursensor (18) ihre Signale an die Regelvorrichtung (20) abgeben und der Regelmodul (22) in Abhängigkeit der Differenz zwischen dem Soll- und Istwert eine oder mehrere Leistungsstufen (L1, L2, L3) der Heizkreise (14.1, 14.2, 14.3) einzeln oder in Kombination aktiviert beziehungsweise deaktiviert,
- **dadurch gekennzeichnet, dass**
- der Regelmodul (22) als PI-Regelmodul ausgebildet ist, der in Abhängigkeit der Regelabweichung, das heißt der Differenz zwischen Soll- und Ist-Temperatur jeweils einen Stellwert berechnet, der mit seinem P-Anteil von der Größe und mit seinem I-Anteil von der Dauer der Regelabweichung abhängt und entsprechend die einzelnen Heizkreise (14.1, 14.2, 14.3) ansteuert,
- auf die Regelvorrichtung (20) zusätzlich eine zweite elektrische Energiequelle (30) für die Leistungsstufen (L1, L2, L3) der Heizkreise (14.1, 14.2, 14.3) schaltbar ist,
- die erste Energiequelle (16) das übliche Stromnetz darstellt und die zweite Energiequelle (30) als individuelle alternative Energiequelle, wie beispielsweise Photovoltaikanlage oder Windkraftanlage, ausgebildet ist, und
- eine Logikschalteinheit (34) zwischen der zweiten Energiequelle (30) und Regelvorrichtung (20) geschaltet ist, die ein Steuersignal bezüglich der jeweiligen aktuellen Energieproduktion der zweiten Energiequelle (30) an die Regelvorrichtung (20) abgibt und bei ausreichender Energieproduktion die zweite Energiequelle zur Energieversorgung der Heizleitereinrichtung freigibt.

2. Fußbodenheizung nach Anspruch 1,
- **dadurch gekennzeichnet, dass**
- die Leistungsstufen (L1, L2, L3) jeweils die gleiche Heizleistung aufweisen.

3. Fußbodenheizung nach Anspruch 1,
- **dadurch gekennzeichnet, dass**
- die Leistungsstufen (L1, L2, L3) unterschiedliche Heizleistungen aufweisen.

4. Fußbodenheizung nach Anspruch 1,
- **dadurch gekennzeichnet, dass**
- eine Betriebsartschalteinheit (32) vorhanden ist, die mit der Regelvorrichtung (20) kommuniziert und mittels derer folgende Betriebszustände über die Regelvorrichtung (20) einstellbar sind:
- 1. Zustand: Energieversorgung der Heizleitereinrichtung (12) mit deren Leistungsstufen (L1, L2, L3) über die erste Energiequelle (16),
- 2. Zustand: Energieversorgung der Heizleitereinrichtung (12) mit deren Leistungsstufen (L1, L2, L3) über die zweite Energiequelle (30) und
- 3. Zustand: Energieversorgung der Heizleitereinrichtung (12) mit deren Leistungsstufen (L1, L2, L3) durch eine Kombination der ersten und zweiten Energiequelle (16, 30).

5. Fußbodenheizung nach Anspruch 4,
- **dadurch gekennzeichnet, dass**
- die Regelvorrichtung (20) so ausgebildet ist, dass nur bei dem Vorliegen eines positiven Signals der Logikeinheit (34) und Aktivierung des zweiten Zustands eine Aktivierung der Heizleitereinrichtung (12) erfolgt, ansonsten die Heizleitereinrichtung (12) deaktiviert ist.

6. Fußbodenheizung nach Anspruch 4,
- **dadurch gekennzeichnet, dass**
- mit der Betriebsartschalteinheit (32) ein vierter Betriebszustand Frostschutz einstellbar ist, bei dem die Regelvorrichtung (20) die Heizleitereinrichtung (12) bei Unterschreiten einer vorgegebenen Temperatur aktiviert, unabhängig von dem eingestellten Betriebszustand der zweiten Energiequelle.

7. Fußbodenheizung nach einem oder mehreren der vorstehenden Ansprüche,
- **dadurch gekennzeichnet, dass**
- die Heizleitereinrichtung (12) eine Heizleitung (14) aufweist, die mehrere elektrisch isoliert und unabhängig voneinander ansteuerbare Heizleiter (14.1, 14.2, 14.3) mit gleichen oder unterschiedlichen Leistungsstufen aufweist.

8. Fußbodenheizung nach Anspruch 7,
- **dadurch gekennzeichnet, dass**
- die Heizleitereinrichtung (12) mit Heizleitung als eine oder mehrere Heizmatten ausgebildet ist, wobei die Heizleitungen insbesondere meanderförmig angeordnet vorhanden sind.

9. Fußbodenheizung nach einem oder mehreren der vorstehenden Ansprüche,
- **dadurch gekennzeichnet, dass**
- das Regelmodul (22), die Heiztemperatureinstelleinheit (24) und Betriebsarteinstelleinheit (32) in einem Reglergehäuse angeordnet sind.

10. Fußbodenheizung nach Anspruch 9,
- **dadurch gekennzeichnet, dass**
- das Gehäuse optische Anzeigeeinheiten zur Anzeige der eingestellten Solltemperatur und des eingestellten Betriebszustandes aufweist.

11. Fußbodenheizung nach einem oder mehreren der vorstehenden Ansprüche,
- **dadurch gekennzeichnet, dass**
- zwei Heizkreise (14.1, 14.2) vorhanden sind, wobei die erste Leistungsstufe (L1) circa 33 % und die zweite Leistungsstufe (L2) circa 66 % der Gesamtheizleistung aufbringt.

12. Fußbodenheizung nach Anspruch 11,
- **dadurch gekennzeichnet, dass**
- bei einem durch die Regelvorrichtung (20) berechneten Stellwert von circa 33 % die erste Leistungsstufe (L1) aktiviert wird, bei einem Stellwert von circa 33 % bis 66 % die zweite Leistungsstufe (L2) aktiviert wird und bei einem Stellwert zwischen 66 % und 100 % die erste und zweite Leistungsstufe (L1, L2) aktiviert wird.

## Claims

1. Underfloor heating, which is connectable to a first electrical energy source (16), having
- a heating conductor device (12), with
-- a first heating circuit (14.1) and a first power stage (L1),
-- at least one second heating circuit (14.2) with a second power stage (L2), and/or
-- further heating circuits (14.3) with further power stages (L3),
- a heating temperature setting unit (24) for setting the setpoint temperature,
- a temperature sensor (18) for measuring the actual temperature,
- a device for activating the heating conductor device (12) on the basis of the respective values of the setpoint and actual temperatures, whereby
- a single control apparatus (20) with a control module (22) is present and is designed as multistage controller and is connected between the first energy source (16) and the heating device (12), wherein the heating temperature setting unit (24) and the temperature sensor (18) output their signals to the control apparatus (20) and the control module (22) activates or deactivates one or more power stages (L1, L2, L3) of the heating circuits (14.1, 14.2, 14.3) individually or in combination on the basis of the difference between the setpoint and actual values,
- wherein
- the control module (22) is designed as a PI control module, which calculates in each case a control output on the basis of the control deviation, that is to say the difference between setpoint and actual temperature, the P component of said control output being dependent on the magnitude of the control deviation and the I component of said control output being dependent on the duration of the control deviation, and correspondingly actuates the individual heating circuits (14.1, 14.2, 14.3),
- in addition, a second electrical energy source (30) for the power stages (L1, L2, L3) of the heating circuits (14.1, 14.2, 14.3) is connectable to the control apparatus (20),
- the first energy source (16) is the usual power grid and the second energy source (30) is designed as individual alternative energy source, for instance photovoltaic installation or wind turbine,
- a logic switching unit (34) is connected between the second energy source (30) and control apparatus (20) and outputs to the control apparatus (20) a control signal relating to the respective present energy production of the second energy source (30) and, in the event of sufficient energy production, enables the second energy source to supply energy to the heating conductor device.

2. Underfloor heating as claimed in claim 1,
- wherein
- the power stages (L1, L2, L3) each have identical heating power.

3. Underfloor heating as claimed in claim 1,
- wherein
- the power stages (L1, L2, L3) have different heating powers.

4. Underfloor heating as claimed in claim 1,
- wherein
- an operating mode switching unit (32) is present which communicates with the control apparatus (20) and by means of which the following operating states can be set via the control apparatus (20):
- first state: energy supply to the heating conductor device (12) with the power stages (L1, L2, L3) thereof via the first energy source (16),
- second state: energy supply to the heating conductor device (12) with the power stages (L1, L2, L3) thereof via the second energy source (30), and
- third state: energy supply to the heating conductor device (12) with the power stages (L1, L2, L3) thereof by a combination of the first and second energy source (16, 30).

5. Underfloor heating as claimed in claim 4,
- wherein
- the control apparatus (20) is designed such that the heating conductor device (12) is activated only when a positive signal of the logic unit (34) is present and the second state is activated, otherwise the heating conductor device (12) is deactivated.

6. Underfloor heating as claimed in claim 4,
- wherein
- a fourth operating state, frost protection, can be set by the operating mode switching unit (32), in which fourth operating state the control apparatus (20) activates the heating conductor device (12) when a predefined temperature is undershot, independently of the set operating state of the second energy source.

7. Underfloor heating as claimed in one or more of the preceding claims,
- wherein
- the heating conductor device (12) has a heating conductor (14) which has a plurality of electrically insulated heating conductors (14.1, 14.2, 14.3) which are actuable independently of one another and have identical or different power stages.

8. Underfloor heating as claimed in claim 7,
- wherein
- the heating conductor device (12) with heating conductor is designed as one or more heating mats, wherein the heating conductors are present, in particular, in a meandrous arrangement.

9. Underfloor heating as claimed in one or more of the preceding claims,
- wherein
- the control module (22), the heating temperature setting unit (24) and operating mode setting unit (32) are arranged in a controller housing.

10. Underfloor heating as claimed in claim 9,
- wherein
- the housing has optical display units for displaying the set setpoint temperature and the set operating state.

11. Underfloor heating as claimed in one or more of the preceding claims,
- wherein
- two heating circuits (14.1, 14.2) are present, wherein the first power stage (L1) applies approximately 33% of the total heating power and the second power stage (L2) applies approximately 66% of the total heating power.

12. Underfloor heating as claimed in claim 11,
- wherein
- in the case of a control output, calculated by the control apparatus (20), of approximately 33%, the first power stage (L1) is activated, in the case of a control output of from approximately 33% to 66%, the second power stage (L2) is activated, and in the case of a control output between 66% and 100%, the first and second power stages (L1, L2) are activated.

## Revendications

1. Chauffage par le sol pouvant être raccordé à une première source d'énergie électrique (16), comportant
- un dispositif à conducteurs chauffants (12), comportant
-- un premier circuit de chauffage (14.1) et un premier étage de puissance (L1),
-- au moins un deuxième circuit de chauffage (14.2) comportant un deuxième étage de puissance (L2) et/ou
-- d'autres circuits de chauffage (14.3) comportant d'autres étages de puissance (L3),
- une unité de réglage de la température de chauffage (24) destinée à régler la température de consigne,
- un capteur de température (18) destiné à mesurer la température réelle,
- un dispositif destiné à activer le dispositif à conducteurs chauffants (12) en fonction des valeurs respectives de la température de consigne et de la température réelle, dans lequel
- il est prévu un dispositif de régulation unique (20) comportant un module de régulation (22) qui est réalisé sous la forme d'un régulateur à plusieurs étages et qui est connecté entre la première source d'énergie (16) et le dispositif de chauffage (12), dans lequel l'unité de réglage de température de chauffage (24) et le capteur de température (18) délivrent leurs signaux au dispositif de régulation (20) et le module de régulation (22) active ou désactive un ou plusieurs étages (L1, L2, L3) des circuits de chauffage (14.1, 14.2, 14.3) de manière individuelle ou combinée en fonction de la différence entre les valeurs de consigne et réelle,
- **caractérisé en ce que**
- le module de régulation (22) est réalisé sous la forme d'un module de régulation PI qui calcule une valeur de réglage en fonction de l'écart de régulation, c'est-à-dire de la différence entre les températures de consigne et réelle, laquelle valeur de réglage dépend par sa composante P de l'amplitude et par sa composante I de la durée de l'écart de régulation, et commande les circuits de chauffage (14.1, 14.2 et 14.3) individuels de manière correspondante,
- une deuxième source d'énergie électrique (30) destinée aux étages de puissance (L1, L2, L3) des circuits de chauffage (14.1, 14.2, 14.3) peut en outre être connectée au dispositif de régulation (20),
- la première source d'énergie (16) représente le réseau électrique habituel et la deuxième source d'énergie (30) est réalisée sous la forme d'une source d'énergie alternative individuelle, telle qu'une installation photovoltaïque ou une éolienne, et
- une unité de commutation logique (34) est connectée entre ladite deuxième source d'énergie (30) et ledit appareil de commande (20), laquelle unité de commutation logique délivre audit appareil de commande (20) un signal de commande relatif à la production d'énergie actuelle respective de la deuxième source d'énergie (30) et libère la deuxième source d'énergie pour l'alimentation en énergie du dispositif à conducteurs chauffants lorsque la production d'énergie est suffisante.

2. Chauffage par le sol selon la revendication 1,
- **caractérisé en ce que**
- les étages de sortie (L1, L2, L3) présentent respectivement la même puissance de chauffage.

3. Chauffage par le sol selon la revendication 1,
- **caractérisé en ce que**
- les étages de sortie (L1, L2, L3) présentent des puissances de chauffage différentes.

4. Chauffage par le sol selon la revendication 1,
- **caractérisé**
- **en ce qu'**il est prévu une unité de basculement de mode de fonctionnement (32) qui communique avec le dispositif de régulation (20) et qui peut être réglée par le dispositif de régulation (20) dans les états de fonctionnement suivants :
- 1er état : alimentation en énergie du dispositif à conducteurs chauffants (12) avec ses étages de puissance (L1, L2, L3) par la première source d'énergie (16),
- 2ème état : alimentation en énergie du dispositif à conducteurs chauffants (12) avec ses étages de puissance (L1, L2, L3) par la deuxième source d'énergie (30), et
- 3ème état : alimentation en énergie du dispositif à conducteurs chauffants (12) avec ses étages de puissance (L1, L2, L3) par une combinaison des première et deuxième sources d'énergie (16, 30).

5. Chauffage par le sol selon la revendication 4,
- **caractérisé en ce que**
- le dispositif de régulation (20) est conçu de telle sorte que le dispositif à conducteurs chauffants (12) ne soit activé que lors de la présence d'un signal positif de l'unité logique (34) et que lorsque le deuxième état est activé, le dispositif à conducteurs chauffant (12) étant désactivé dans le cas contraire.

6. Chauffage par le sol selon la revendication 4,
- **caractérisé en ce que**
- l'unité de basculement de mode de fonctionnement (32) permet de régler un quatrième état de fonctionnement de protection contre le gel dans lequel le dispositif de régulation (20) active le dispositif à conducteurs chauffants (12) lorsque la température s'abaisse en dessous d'une température prédéterminée, indépendamment de l'état de fonctionnement réglé de la deuxième source d'énergie.

7. Chauffage par le sol selon l'une ou plusieurs des revendications précédentes,
- **caractérisé en ce que**
- le dispositif à conducteurs chauffants (12) comporte un câble chauffant (14) qui comporte plusieurs conducteurs chauffants (14.1, 14.2, 14.3) isolés électriquement et pouvant être commandés indépendamment les uns des autres, lequel câble chauffant comporte des étages de puissance identiques ou différents.

8. Chauffage par le sol selon la revendication 7,
- **caractérisé en ce que**
- le dispositif à conducteurs chauffants (12) comportant un câble chauffant est réalisé sous la forme d'un ou de plusieurs tapis chauffants, dans lequel les câbles chauffants sont notamment disposés sous la forme de méandres.

9. Chauffage par le sol selon l'une ou plusieurs des revendications précédentes,
- **caractérisé en ce que**
- le module de régulation (22), l'unité de réglage de la température de chauffage (24) et l'unité de réglage du mode de fonctionnement (32) sont disposés dans un boîtier de régulateur.

10. Chauffage par le sol selon la revendication 9,
- **caractérisé en ce que**
- le boîtier comporte des unités d'affichage optiques pour l'affichage de la température de consigne réglée et de l'état de fonctionnement réglé.

11. Chauffage par le sol selon l'une ou plusieurs des revendications précédentes,
- **caractérisé**
- **en ce qu'**il est prévu deux circuits de chauffage (14.1, 14.2), dans lequel le premier étage de puissance (L1) produit environ 33% et le deuxième étage de puissance (L2) produit environ 66% de la puissance thermique totale.

12. Chauffage par le sol selon la revendication 11,
- **caractérisé en ce que**
- le premier étage de puissance (L1) est activé pour une valeur de réglage d'environ 33% calculée par le dispositif de régulation (20), le deuxième étage de puissance (L2) est activé pour une valeur de réglage d'environ 33 à 66% et les premier et deuxième étages de puissance (L1, L2) sont activés pour une valeur de réglage comprise entre 66 et 100%.
